# EUROPEAN PATENT SPECIFICATION

(11) **EP 3 910 479 B1**
(45) Date of publication and mention of the grant of the patent: **28.10.2026**
(21) Application number: 21173831.5
(22) Date of filing: 14.05.2021
(51) Int. Cl.: G06F 21/57, G06F 21/62, G06N 20/00, G06F 11/3668, G06F 11/3698, G06N 5/02

(54) **A METHOD AND A SYSTEM FOR TESTING MACHINE LEARNING AND DEEP LEARNING MODELS FOR ROBUSTNESS, AND DURABILITY AGAINST ADVERSARIAL BIAS AND PRIVACY ATTACKS**
VERFAHREN UND SYSTEM ZUM TESTEN VON MASCHINENLERN- UND TIEFENLERNMODELLEN FÜR ROBUSTHEIT UND BESTÄNDIGKEIT GEGEN FEINDLICHE VERZERRUNGS- UND PRIVATSPHÄRENANGRIFFE
PROCÉDÉ ET SYSTÈME POUR TESTER L'APPRENTISSAGE AUTOMATIQUE ET LES MODÈLES D'APPRENTISSAGE EN PROFONDEUR POUR EN DÉTERMINER LA ROBUSTESSE ET LA DURABILITÉ CONTRE LES PRÉJUGÉS ACCUSATOIRES ET LES ATTAQUES CONTRE LA VIE PRIVÉE

(30) Priority: 15.05.2020 US 202063025200 P
(43) Date of publication of application: 17.11.2021
(73) Proprietor: Deutsche Telekom AG, 53113 Bonn (DE)
(72) Inventor: ELOVICI, Yuval, 7986400 Arugot (IL); SHABTAI, Asaf, 7684200 Hulda (IL); BRODT, Oleg, 8471621 Beer Sheva (IL); MIMRAN, David, 6215505 Tel Aviv (IL); KHAVKIN, Michael, 8452439 Beer Sheva (IL); GROLMAN, Edita, 8458503 Beer Sheva (IL)
(74) Representative: Weickmann & Weickmann PartmbB

(56) References cited:
- US-A1- 2016 132 787
- US-A1- 2020 082 097
- SATO D. ET AL: "Continuous delivery for machine learning", 19 September 2019 (2019-09-19), XP055839738, Retrieved from the Internet <URL:https://web.archive.org/web/20200503222841/https://martinfowler.com/articles/cd4ml.html> [retrieved on 20210909]
- VINAY SRIDHAR SRIRAM SUBRAMANIAN SWAMINATHAN SUNDARARAMAN DULCARDO ARTEAGA DREW ROSELLI PARALLELM NISHA TALAGALA: "Model Governance: Reducing the Anarchy of Production ML", 11 July 2018 (2018-07-11), pages 362 - 368, XP061025639, Retrieved from the Internet <URL:https://www.usenix.org/sites/default/files/atc18_full_proceedings_interior.pdf> [retrieved on 20180711]

## Description

### Field of the Invention

The present invention relates to the field of machine learning and deep learning models. More particularly, the present invention relates to a system and method for testing machine learning and deep learning models for robustness, and durability against adversarial bias and privacy attacks.

### Background of the Invention

Machine learning (ML) has many applications and research directions. Nowadays, the majority of ML methods focus on improving the performance of the created models. There are several performance measurements for evaluating ML models, such as the accuracy (accuracy is defined as the percentage of correct predictions for the test data. It can be calculated easily by dividing the number of correct predictions by the number of total predictions), the precision (precision is defined as the number of true positives divided by the number of true positives plus the number of false positives) and the recall (a recall is a metric that quantifies the number of correct positive predictions made out of all positive predictions that could have been made) of the learned model. However, these conventional evaluation methods measure the performance of the created models without considering possible ethical and legal consequences that are related to sensitive information about the entities (usually user-related data) which might be discovered. Therefore, it is required to define performance measurements for evaluating possible ethical and legal aspects of ML models.

Data owners, such as organizations, are obliged to follow the Data Protection Directive (Commision, 2018) (officially Directive 95/46/EC of the European Union). First adopted in 1995, this directive regulates the processing of personal data and its movement within the European Union. Recently, the directive has been extended to the General Data Protection Regulation (GDPR), officially enforced on May 2018, presenting increased territorial scope, stricter conditions and broader definitions of sensitive data. Furthermore, this regulation contributes to increasing data transparency and empowerment of data subjects.

Many ML models such those described in US 2016/0132787 and US 2020/0082097 try to solve different artificial intelligence (AI) tasks. Typically, it is required to detect and measure various entity (usually users) violations and the resilience of the induced model to them. It is also required to mitigate those risks in order to deploy a more resilient ML model for production usage. Mitigating the above risks introduces the challenging task of examining the trade-off between the performances of the model to its robustness against different types of abuse.

It is therefore an object of the present invention to provide a system and method for testing machine learning and deep learning models for robustness, bias and privacy.

It is another object of the present invention to provide a system and method for examining the robustness and resilience of Al-based tasks to adversarial attacks, biases and privacy violations.

Other objects and advantages of the invention will become apparent as the description proceeds.

### Summary of the Invention

A system for testing Machine Learning (ML) and deep learning models for robustness, and durability against adversarial bias and privacy attacks, comprising:
a) a Project Repository within which metadata of ongoing projects each of which having a defined project policy and of created ML models and data sources being associated with said ongoing projects is storable, wherein the defined policy defines criteria for a desired robustness level in each testable robustness category of bias, privacy and adversarial learning, a project being completed only when a ML model is certified to comply with all constrains of its corresponding policy;
b) a Data Repository within which training and testing datasets and ML models used in each project are storable;
c) a Test Recommendation Engine for recommending relevant attacks/tests for each evaluated ML model by matching a testing methodology according to a model type and model properties and for creating a recommended attacks/test, wherein stored training and testing datasets are used for evaluating robustness of each of the ML models, and each of the recommended attacks/tests is evaluated relative to a data source being the training or testing dataset and an evaluation outcome corresponds to the robustness of the ML model on said data source, wherein the Test Recommendation Engine is operable to recommend relevant attacks/tests for each evaluated ML model by matching a testing methodology according to model type and model properties and to create the recommended attacks/tests for each of the testable robustness categories;
d) a Defense Repository in which are stored defense mechanisms;
e) an Attack Repository for storing the recommended tests/attacks by which an ML model is tested against each of the testable robustness categories; and
f) a Project/Test Analytics module for analyzing test results and is operable to suggest one of the defense mechanisms stored in the Defense Repository for mitigating a vulnerability located in the model being tested, wherein the Project/Test Analytics module is operable to monitor changes in performance over time of the test results in terms of robustness certification so as to locate a vulnerability in the model being tested in the event of a failed test and to re-run the test for which the model failed after being applied with the suggested defense mechanism to facilitate an increase in resilience of the model with respect to one of the tested robustness categories and certification of the model.

In one aspect, the system further comprises a Test Execution Environment for running multiple tests.

In one aspect, the system further comprises a Data/Model Profiler for creating a profile, based on settings and configurations of the datasets and the ML models.

In one aspect, the system further comprises a Test/Attack Ontology module (205) for storing the recommended attacks/tests with metadata and mapping the recommended attacks/tests to corresponding settings and configurations.

In one aspect, the defined project policy defines a minimum robustness score that is required for a ML model to be accepted and certified.

States of a project are selected from the group consisting of:
- A Development state;
- A Production state;
- A Rollback state.

In one aspect, the Data Repository further comprises a Model Repository for storing model versions that reflect changes in an ML model.

In one aspect, each relevant test to be executed on an examined model is a:
- Model algorithm type; or
- Training data type; or
- Training data size; or
- Model implementation format/type.

In one aspect, a system is implemented over a Fronted Management Server which is adapted to run the system modules and provide an API access for external command-line interface (CLI) and a frontend User Interface (UI) service that allows performing one or more system operations.

In one aspect, the system operations include one or more of the following:
- Creating new projects;
- Creating new users;
- Assigning new users to existing projects;
- Assigning a policy to existing projects;
- Creating new test suites;
- Executing test suites;
- Accessing analytics of projects or their test suites.

### Brief Description of the Drawings

The above and other characteristics and advantages of the invention will be better understood through the following illustrative and non-limitative detailed description of preferred embodiments thereof, with reference to the appended drawings, wherein:
- Fig. 1 shows a comparison between common performance KPIs to ethical and legal robustness KPIs;
- Fig. 2 illustrates a full architecture of the system for testing machine learning and deep learning models for robustness, and durability against adversarial bias and privacy attacks, according to an embodiment of the invention;
- Fig. 3 illustrates several model versions that can exist for each model in a project;
- Fig. 4 shows an example screenshot of a possible state of the main page of a project in the UI of the system; and
- Fig. 5 shows a screenshot of a possible state of test suite analytics main page, where a test suite of 8 different tests have been executed.

### Detailed Description of the Invention

The present invention proposes a system for examining the robustness and resilience of various Al-based tasks to adversarial attacks, biases and privacy violations. The present invention provides a generic and adaptive testing environment, which can be integrated to Continuous Integration (CI - is a modern software development practice in which incremental code changes are made frequently and reliably. Automated build-and-test steps triggered by CI ensure that code changes being merged into the repository are reliable)/Continuous Delivery (CD- the automated delivery of completed code to environments like testing and development. CD provides an automated and consistent way for code to be delivered to these environments) processes.

The proposed system is capable of serving software developers during developing ML models. The proposed system is used to continuously certificate ML models according to a corporate policy of a project. This policy defines the criteria for the desired robustness levels (a machine learning model is considered to be robust if its output dependent variable is consistently accurate even if one or more of the input independent variables (features) or assumptions are drastically changed due to unforeseen circumstances) in each tested category: bias, privacy and adversarial learning.

For each one of the categories, the system provides different tests to examine the robustness levels. These tests are also referred to as attacks according to the category. The terms attacks or tests are used interchangeably: when testing for privacy breaches or adversarial learning, the tests are referred to as attacks, whereas when testing for unwanted bias, these attacks are referred as tests.

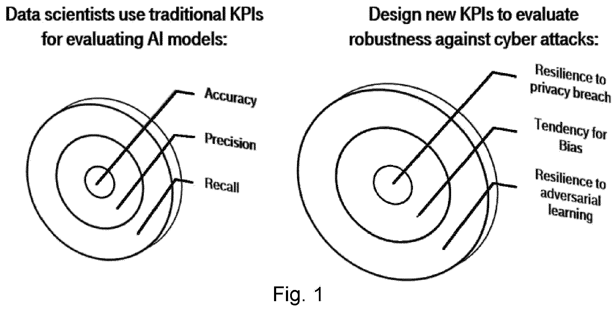

Fig. 1 illustrates the differences between conventional (standard) Key Performance Indicators (KPIs - a measurable values that demonstrate how effectively a company is achieving key business objectives. Organizations use KPIs at multiple levels to evaluate their success at reaching targets) and the new suggested KPIs of robustness, according to an embodiment of the invention.

The proposed system analyzes the following three categories:

### Category 1: Privacy

This category represents the resilience of ML models to privacy breaches or the leakage of sensitive information.

Not only the data itself can reveal private sensitive information, but also the machine learning (ML) models that are induced from this data. An example for a scenario in which the ML model can reveal private information, is in the case of overfitting. Overfitting relates to a natural property of ML models, where learned patterns from the training data are "memorized" and "embedded" into the model, leading to a lack of generalization of these patterns when new unseen data is used by the model. This lack of generalization can lead to a substantial degradation in performance. Consequently, developers are more concerned about the side-effects of overfitting in ML models. The unintended memorization of data patterns in a created model can be beneficial to an adversary, to infer sensitive information.

It has been demonstrated (Fredrikson, et al.; Fredrikson, Jha, & Ristenpart, Model inversion attacks that exploit confidence information and basic countermeasures, 2015; Veale, Binns, & Edwards, 15 Oct, 2018) that ML models are vulnerable to a range of cybersecurity attacks that cause breaches of confidentiality, while violating the GDPR principals. These attacks compromise both the integrity of the ML model and its reputation following the model deployment to service.

In the case of ML-based systems, there are different types of privacy attacks (Papernot, McDaniel, Sinha, & Wellman , 24 Apr 2018) (Veale, Binns, & Edwards, 15 Oct, 2018):
- **Membership inference:** Determining whether a given data record was part of the model training dataset or not (Shokri, Stronati, Song, & Shmatikov, 2017).
- **Model extraction:** Constructing a surrogate model with predictive performance on validation data, which is similar to the target model (Tramèr, Zhang, Juels, Reiter, & Ristenpart, 2016).
- **Model inversion (attribute inference):** A privacy breach that occurs if an adversary can infer the values of sensitive attributes. Such attacks are directed to take advantage of correlation between the unknown attributes and the model output or other dataset characteristics (Fredrikson, Jha, & Ristenpart, Model inversion attacks that exploit confidence information and basic countermeasures, 2015).
- **External information leakage:** Training datasets may contain some implicit hidden properties which are not expressed as explicit attributes in the data. External information leakage attacks are directed to extract these hidden properties out of the datasets using the ML model (Ateniese, et al., 19 Jun, 2013).

### Category 2: Bias

This category represents the tendency for bias in the predictions of ML models or in the data used to induce the ML model. Bias in machine learning (ML) is referred to misrepresentation of the population, on which the model is trained. Bias is represented by the presence of non-ethical discrimination towards any of the population groups distributed in the data. For example, bias may exist if male and female with the same properties are treated differently. Fairness is defined as the absence of any prejudice or favoritism toward an individual or a group based on their inherent or acquired characteristics. Unfair algorithm is an algorithm whose outcomes (i.e., predictions in ML models) are skewed toward a particular group of people (Mehrabi, Morstatter, Saxena, Lerman, & Galstyan, 23 Aug, 2019). Protected feature is a feature that can present unwanted discrimination towards its values, e.g., gender or race. Privileged value is a population group that historically had a systematic advantage, e.g., "men" is a privileged value in the "gender" protected feature. For example, in a fair ML model, when predicting whether a person is an engineer, the probability of identifying an engineer should be the same for female or male.

ML algorithms rely on the existence of sufficient, high quality training data. Obtaining high quality labeled data is an expensive, time-consuming task, which usually requires human efforts and expertise. Obtaining a sufficiently large dataset, which covers the entire properties of the domain in which the Al system is implemented, is quite complicated. Therefore, ML models are trained on a subsample of the entire population, assuming that any learned patterns and deductions on this small subsample can be generalized to the entire population. An example of non-generalization of datasets is when the data gathering process is not random and is sufficiently diverse, to cover the entire distribution in the population. When data instances are chosen non-randomly or without matching them to the nature of the instances used for prediction, the predictions of the ML models become biased toward the dominating group in the training population.

Additional reason for bias may be inherited in the training dataset itself, without being related to the data gathering process. It means that the data itself contains protected features with historically established privileged value. Moreover, examining the robustness and resilience of various Al-based tasks to bias requires examining what the ML model has learned. ML models may learn biased patterns which may influence its predictions even if the protected features are not explicitly defined.

### Category 3: Adversarial Learning

This category represents the resilience of ML models to adversarial learning, since Machine learning (ML) algorithms can also be susceptible to adversarial abuse.

Adversarial ML involves exploiting the vulnerabilities of the models to compromise Integrity, Availability and Confidentiality (Pfleeger & P., 2012) (Barreno, Nelson, Joseph, & Tygar, 2010).
- *Availability -* is directed to attacks that are directed to preventing legitimate inputs from accessing the system or the outputs of its models, i.e., false positives. For example, an adversary may want to flag users as intrusions, that way preventing them from buying at a competitor's web store.
- *Integrity -* is directed to attacks that are directed to approving hostile inputs into the system, thereby providing an adversary with access to the system and its outputs, i.e., false negatives. For example, an adversary may want to grant himself an administrator access to his competitor's web store and sabotage it.
- *Confidentiality -* is directed to attacks that attempt to expose the structure or parameters of ML models. Compromising confidentiality can be defined with respect to the model itself, or its training data.

During adversarial learning attacks on ML models, existing weaknesses of the model are exploited to manipulate its outputs when new hand-crafted data examples are provided as inputs which are formed by applying small but intentional perturbations to them. Consequently, the ML models consistently misclassify these adversarial examples, and thereby, output an incorrect answer with high confidence. Moreover, adversarial examples often cannot be distinguished from their corresponding original examples by a human eye. The same adversarial example can usually fool a variety of classifiers with different architectures or trained on different subsets of the training data (Szegedy, et al., 21 Dec, 2013).

During a project life-cycle, the system proposed by the present invention allows software developers and data scientists to revise the models (if needed) and re-certificate them, until the models successfully pass all robustness and resilience tests. As a feedback, the proposed system provides the data scientist with suggestions for improving the robustness of the tested model and suggests defense mechanisms for increasing its resilience. In addition, the proposed system allows a transparent supervision and control of a project manager, starting with an initiation of a data science project up to its final approval and certification. Once the models have passed all tests, they can be safely deployed to their designated product.

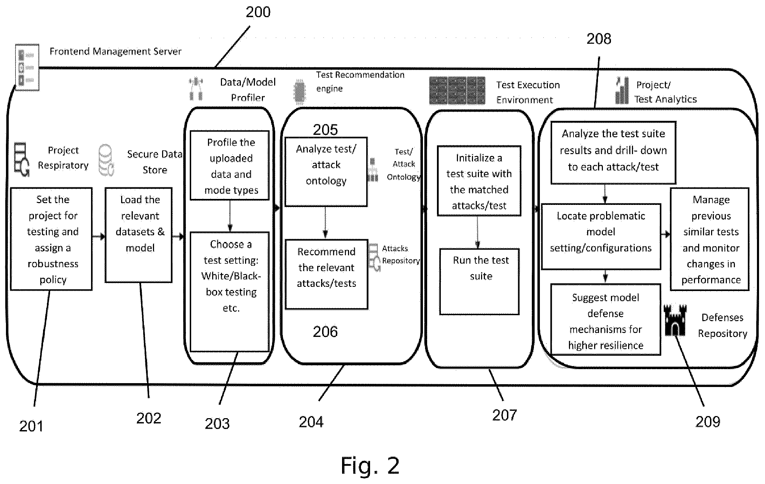

The full architecture of the system is illustrated in Fig. 2. The proposed system is implemented by a management server 200. The management server 200 operates the system and is adapted to generate both visual and text reports. In addition, the management server 200 provides a frontend service to create, execute and evaluate tests.

The management server 200 comprises a **Project Repository** 201 that contains ongoing projects that the data scientist is working on and stores their metadata. A project is the most general entity in the system and is characterized by a high-level goal, which states the main motivation for the project, with sub-tasks that should be completed. The created ML models and the data sources are associated with the defined project and correspond to its goals.

A project policy is attached to each project. A defined project policy specifies the acceptance criteria for each of the tested aspects: bias, privacy and adversarial learning. The project policy defines the minimum robustness score that is required for a model to be accepted and certified. A project is completed only when the ML model is certified to comply with all the constrains of its corresponding policy.

A project can be in different states, such as:
1. **A Development** state - at this state the models under the project are still under development and are continuously tested for robustness.
2. **A Production state** - at this state the project is completed, and all its related models are accepted and certified against the project policy. The models are deployed to service in a production environment. The life-cycle of the model is closed, until new issues about its robustness are raised.
3. **A Rollback state** - at this state robustness issues have been raised, rejecting the already deployed models. The rejected models are removed from production environments and are returned to development for further adjustments or a complete revision.

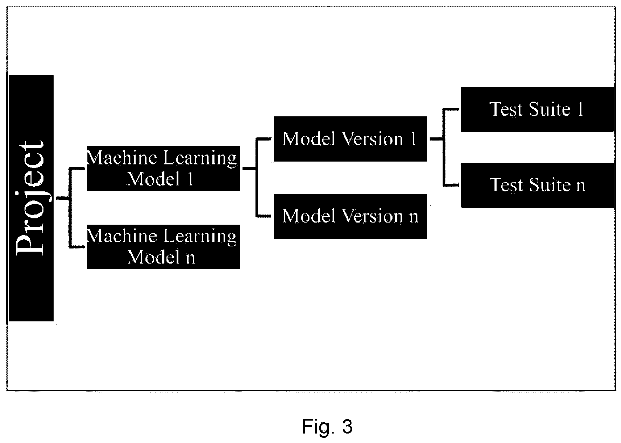

The management server 200 also comprises a **Secure Data Repository 202** for storing the datasets and models used in each project, for further reuse. Both training dataset and testing datasets are stored and used for evaluating the robustness. An indexed secured repository is built for quick retrieval of datasets, which are a global resource in the system. Different data scientists, possibly working on different projects, have access to the same global datasets. Two types of data sources are stored in the repository, a training dataset and a testing dataset. A training dataset is a dataset which is used to induce a ML model, and therefore the model is highly dependent on it. The testing dataset is usually used for evaluating the performance of the ML model. In addition, the training and testing datasets are used to test violations of the examined categories. Each attack/test is evaluated relatively to a data source (training and testing dataset) and its final outcome corresponds to the robustness of the model on that specific data source. Therefore, a data science can verify his/her ML model on different data sources in order to increase the significance of the test results. The **Secure Data Repository 202** also comprises a ***Model Repository since* t**he ML model is the basic entity for a data scientist. Since an ML model is changing during its life-cycle, each change to the ML model creates a new model version. Each model version is an evolution of the initial model. The changes are made in attempt to improve the ML model performance and robustness. Changes to a ML model may be using a new training dataset, changes to model configuration, or changes to the type of its underlying algorithm etc. Each model version is associated with its parent model, for quick retrieval, in case of required revisions. Many model versions exist for each model in a project, as shown in Fig. 3. In addition to the compiled ML model, metadata and other configurations are also stored as additional information.

The management server 200 also comprises a **Data/Model Profiler 203 that** creates a profile, based on the settings and configurations of the datasets and the models. There are many factors for choosing the relevant tests to be executed on the examined model, for example:
1. **Model algorithm type** - the type of the algorithm that is used to build the ML model (e.g., Neural Network-based model (NN), rule-based model or general model, etc.).
2. **Training data type** - the type of data used for training the ML model (e.g., structured tabular data, unstructured image data, unstructured sequence audio data, etc.).
3. **Training data size** - the amount of data instances used for training the ML model. Models which are trained on small datasets are more challenging to test and may require additional data resources.
4. **Model implementation format/type** - the type of environment used for implementing the model algorithm (e.g., Python Keras-based (Chollet, 2015) neural network models, or Python ScikitLearn (Varoquaux, et al., 2015) general models, etc.).

The management server 200 also comprises a **Test Recommendation Engine 204** that recommends the relevant and most indicative attacks/tests for each examined model. The test recommendation engine 204 is used to create indicative and effective test suites (a test suite is a collection of robustness tests which are executed as part of the same robustness category: privacy, bias or adversarial learning).

There are two main types for a ML model:
- **A Black-box** ML model: In a black-box setting, the model is used in a query-response setting. The model is queried for its output without requiring any knowledge about its internal algorithm or its internal structure and configuration.
- **A White-box** ML model: In a white-box setting, there is a complete access to the model internal structure and configuration.

The recommendation engine 204 matches the defined testing methodology according to the model type (e.g. black-box, white-box) and other properties of the model and the datasets (sources) and provides the data scientist with a list of recommended tests. The recommended tests are also the most indicative for the presence of robustness issues.

The management server 200 also comprises a **Test/Attack Ontology 205 module that** stores all attacks/tests with their metadata and maps the attacks/tests to their corresponding settings and configurations.

The management server 200 also comprises an **Attack Repository 206** that stores the implemented tests/attacks. An ML model is tested against each one of the robustness categories (privacy, bias and adversarial learning). The implementations of the attacks/tests are stored in the designated repository, and are also indexed, for quick retrieval. In addition, the tests are categorized according to the properties of examined model and its datasets.

The management server 200 also comprises a **Test Execution Environment 207** that Initializes a test suite, which is a collection of several attacks/tests that corresponds to the examined model. The test execution environment 207 is a distributed computing environment for running multiple tests. Since each test involves different computational resources, tests can run for a different amount of time. Hence, the test execution environment 207 is responsible for prioritizing the tests in the test suite and scheduling their execution. Resources and running time for each test are monitored by the testing environment for improving its efficiency.

The management server 200 also comprises a **Project/Test Analytics module 208** that analyzes the test suite results and drill-down to each attack/test result and provides project test level results, analytics and defense mechanisms for the tested model to increase its resilience. The **Project/Test Analytics module 208** manages previous similar tests and monitors changes in performance over time. This allows the system 200 to provide both a high-level and a detailed analysis tools for monitoring the progress of the project in terms of robustness certification. A more detailed report ("drill-down") can be generated.

Examples of the report contents are:
- **Project State** - describes the state of the project (i.e., development, production or rollback).
- **Executed Test Suites** - **a** summary of the recent executed test suites (with respect to the given project).
- **Testing Coverage** - coverage of executed tests in each testing category (privacy, bias or adversarial learning), out of all the available tests in the test/attack repository. Full coverage is considered when all available tests have been executed.
- **Project Total Score - the** total score which reflects the resilience of the related models of the project.
- **Robustness-Performance Tradeoff** - the tradeoff between the robustness of each tested category (i.e., resilience to privacy breaches, bias and adversarial learning) and its influence on the performance of the model (i.e., accuracy/precision/recall).

### Test suite analytics

The system provides a detailed analysis of each executed test suite, for example:
- **Tests summary** - summary of executed tests within the given test suite. A score is attached to each test, which reflects the level of robustness of the ML model to the executed test (i.e., an attack).
- **Test suite statistics** - **a** summary of test suite statistics, containing information about test suite testing settings, information about the examined model and its related data sources.
- **Detailed test results** - detailed statistics and results of each executed test in the test suite.

### Mitigation Defenses

In case of failed tests, the system locates possible problematic model settings/configurations and proposes relevant defense mechanisms for mitigating the corresponding vulnerabilities out of the available defenses in the defenses repository. The data scientist can choose which defense mechanism to apply on his ML model and analyze its effectiveness. As a re-certification step, the system enables re-running the last failed test suite for conforming the increase in the model resilience with respect to the tested robustness category.

The management server 200 also comprises a **Defenses Repository 209** that stores the implemented defense methods. To mitigate possible issues with the robustness of the ML models, defenses are implemented and stored in the defense repository. The defenses are implemented for each robustness category (privacy, bias or adversarial learning) and can be applied on vulnerable ML models as a mitigation step towards a successful certification of the model.

The Fronted Management Server **200** is responsible for activating the relevant entities in the different flows in the system. It provides an API access for external command-line interface (CLI), or other third-parties who may use the system. In addition, a frontend User Interface (UI) service allows performing the previously described system operations. For example:
- Creating new projects
- Creating new users
- Assigning new users to existing projects
- Assigning a policy to existing project
- Creating new test suites
- Executing test suites
- Accessing analytics of projects or their test suites

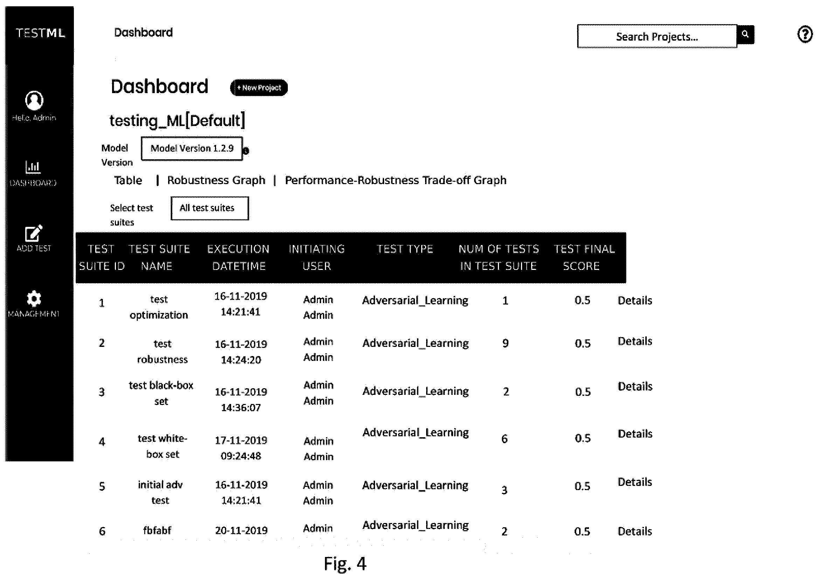

Fig. 4 shows an example screenshot of a possible state of the main page of a project in the UI of the system.

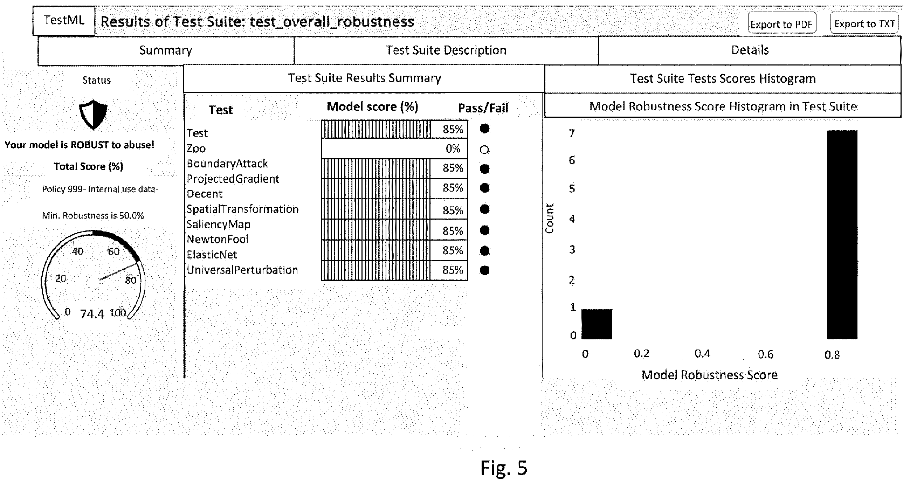

Fig. 5 shows a screenshot of a possible state of test suite analytics main page, where a test suite of 8 different tests have been executed.

### References

Ateniese, G., Felici, G., Mancini, L. V., Spognardi, A., Villani, A., & Vitali, D. (19 Jun, 2013). Hacking smart machines with smarter ones: How to extract meaningful data from machine learning classifiers. arXiv preprint arXiv:1306.4447.
Barreno, M., Nelson, B., Joseph, A. D., & Tygar, J. D. (2010). The security of machine learning. Machine Learning, 8(12), 121-148.
Chollet, F. (2015). Keras.
Commision, E. (2018). EU data protection rules. (European Commision) Retrieved from https://ec.europa.eu/commission/priorities/justice-and-fundamental-rights/data-protection/2018-reform-eu-data-protection-rules/eu-data-protection-rules_en
Fredrikson, M., Jha, S., & Ristenpart, T. (2015). Model inversion attacks that exploit confidence information and basic countermeasures. Proceedings of the 22nd ACM SIGSAC Conference on Computer and Communications Security, 1322-1333.
Fredrikson, M., Lantz, E., Jha, S., Lin, S., Page, D., & Ristenpart, T. (n.d.). Privacy in pharmacogenetics: An end-to-end case study of personalized warfarin dosing. 23rd {USENIX} Security Symposium ({USENIX} Security 14), 17-32.
Mehrabi, N., Morstatter, F., Saxena, N., Lerman, K., & Galstyan, A. (23 Aug, 2019). A Survey on Bias and Fairness in Machine Learning. arXiv preprint arXiv:1908.09635.
Papernot, N., McDaniel, P., Sinha, A., & Wellman, M. P. (24 Apr 2018). SoK: Security and privacy in machine learning. In 2018 IEEE European Symposium on Security and Privacy (EuroS&P) (pp. 399-414). IEEE.
Pfleeger, S. L., & P., P. C. (2012). Analyzing Computer Security: A Threat/Vulnerability/Countermeasure Approach. Prentice Hall Professional.
Shokri, R., Stronati, M., Song, C., & Shmatikov, V. (2017). Membership inference attacks against machine learning models. 2017 IEEE Symposium on Security and Privacy (SP), 3-18.
Szegedy, C., Zaremba, W., Sutskever, I., Bruna, J., Erhan, D., Goodfellow, I., & Fergus, R. (21 Dec, 2013). Intriguing properties of neural networks. arXiv preprint arXiv:1312.6199.
Tramèr, F., Zhang, F., Juels, A., Reiter, M. K., & Ristenpart, T. (2016). Stealing machine learning models via prediction apis. 25th {USENIX} Security Symposium ({USENIX} Security 16), 601-618.
Varoquaux, G., Buitinck, L., Louppe, G., Grisel, O., Pedregosa, F., & Mueller, A. (2015). Scikitlearn: Machine learning without learning the machinery. GetMobile: Mobile Computing and Communications, 19(1), 29-33.
Veale, M., Binns, R., & Edwards, L. (15 Oct, 2018). Algorithms that remember: model inversion attacks and data protection law. Philosophical Transactions of the Royal Society A: Mathematical, Physical and Engineering Sciences 376(2133), 20180083*.*

## Claims

1. A system (200) for testing Machine Learning, ML, and deep learning models for robustness, and durability against adversarial bias and privacy attacks, comprising:
a) a Defense Repository (209) in which are stored defense mechanisms;
b) a Test Recommendation Engine (204) for recommending relevant attacks/tests for each evaluated ML model by matching a testing methodology according to model type and model properties and for creating a recommended attack/test, wherein stored training and testing datasets are used for evaluating robustness of each of the ML models, and each of the recommended attacks/tests is evaluated relative to a data source being the training or testing dataset and an evaluation outcome corresponds to the robustness of the ML model on said data source; and
c) a Project/Test Analytics module (208) for analyzing test results and is operable to suggest one of the defense mechanisms stored in the Defense Repository for mitigating a vulnerability located in the model being tested,
**characterized in that** the system further comprises:
d) a Project Repository (201) within which metadata of ongoing projects each of which having a defined project policy and of created ML models and data sources being associated with said ongoing projects is storable, wherein the defined project policy defines criteria for a desired robustness level in each testable robustness category of bias, privacy and adversarial learning, a project being completed only when a ML model is certified to comply with all constrains of its corresponding defined project policy;
e) a Data Repository (202) within which the training and testing datasets and ML models used in each of said projects are storable; and,
f) an Attack Repository (206) for storing the recommended tests/attacks by which an ML model is tested against each of the testable robustness categories,
wherein the Test Recommendation Engine (204) is operable to recommend relevant attacks/tests for each evaluated ML model by matching a testing methodology according to model type and model properties and to create the recommended attacks/tests for each of the testable robustness categories,
wherein the Project/Test Analytics module (208) is operable to monitor changes in performance over time of the test results in terms of robustness certification so as to locate a vulnerability in the model being tested in the event of a failed test and to re-run the test for which the model failed after being applied with the suggested defense mechanism to facilitate an increase in resilience of the model with respect to one of the tested robustness categories and certification of the model.

2. A system according to claim 1, further comprising a Test Execution Environment (207) for running multiple tests.

3. A system according to claim 1, further comprising a Data/Model Profiler (203) for creating a profile, based on settings and configurations of the datasets and the ML models.

4. A system according to claim 1, further comprising a Test/Attack Ontology module (205) for storing the recommended attacks/tests with metadata and mapping the recommended attacks/tests to corresponding settings and configurations.

5. A system according to claim 1, wherein the defined project policy defines a minimum robustness score that is required for a ML model to be accepted and certified.

6. A system according to claim 1, wherein states of a project are selected from the group consisting of:
- A Development state;
- A Production state;
- A Rollback state.

7. A system according to claim 1, wherein the Data Repository (202) further comprises a Model Repository for storing model versions that reflect changes in an ML model;

8. A system according to claim 1, wherein each relevant test to be executed on an examined model is a:
- Model algorithm type; or
- Training data type; or
- Training data size; or
- Model implementation format/type.

9. A system according to claim 1, implemented over a Fronted Management Server being adapted to run the system modules and provide an API access for external command-line interface (CLI) and a frontend User Interface (UI) service that allows performing one or more system operations.

10. A system according to claim 1, wherein the system operations include one or more of the following:
- Creating new projects;
- Creating new users;
- Assigning new users to existing projects;
- Assigning a policy to existing projects;
- Creating new test suites;
- Executing test suites;
- Accessing analytics of projects or their test suites.

## Patentansprüche

1. System (200) zum Testen von Modellen des Maschinellen Lernens, ML, und des Deep Learning auf Robustheit und Widerstandsfähigkeit gegen feindliche Bias- und Datenschutzangriffe, umfassend:
a) ein Abwehr-Repository (209), in welchem Abwehrmechanismen gespeichert sind;
b) eine Test-Empfehlungs-Engine (204) zum Empfehlen von relevanten Angriffen/Tests für jedes ausgewertete ML-Modell, indem eine Testmethodik gemäß einem Modelltyp und Modelleigenschaften abgeglichen wird, und zum Erstellen eines empfohlenen Angriffs/Tests, wobei gespeicherte Trainings- und Testdatensätze zur Auswertung einer Robustheit jedes der ML-Modelle verwendet werden und jeder der empfohlenen Angriffe/Tests relativ zu einer Datenquelle, welche der Trainingsdatensatz oder der Testdatensatz ist, ausgewertet wird und ein Auswertungsergebnis der Robustheit des ML-Modells auf der genannten Datenquelle entspricht; und
c) ein Projekt-/Test-Analysemodul (208) zum Analysieren von Testergebnissen und welches dazu betreibbar ist, einen der in dem Abwehr-Repository gespeicherten Abwehrmechanismen zur Behebung einer in dem zu testenden Modell befindlichen Schwachstelle vorzuschlagen,
**dadurch gekennzeichnet, dass** das System ferner umfasst:
d) ein Projekt-Repository (201), in welchem Metadaten laufender Projekte, von welchen jedes eine definierte Projektrichtlinie aufweist, sowie erstellter ML-Modelle und Datenquellen, welche den genannten laufenden Projekten zugeordnet sind, speicherbar sind, wobei die definierte Projektrichtlinie Kriterien für ein gewünschtes Robustheitsniveau in jeder prüfbaren Robustheitskategorie aus Bias, Datenschutz und feindlichem Lernen definiert, wobei ein Projekt erst dann abgeschlossen ist, wenn ein ML-Modell zertifiziert ist, dass es allen Anforderungen der entsprechenden definierten Projektrichtlinie entspricht;
e) ein Daten-Repository (202), in welchem die Trainings- und Testdatensätze sowie die in jedem der genannten Projekte verwendeten ML-Modelle speicherbar sind; und
f) ein Angriffs-Repository (206) zum Speichern der empfohlenen Tests/Angriffe, durch welche ein ML-Modell gegen jede der prüfbaren Robustheitskategorien getestet wird,
wobei die Test-Empfehlungs-Engine (204) dazu betreibbar ist, relevante Angriffe/Tests für jedes ausgewertete ML-Modell zu empfehlen, indem eine Testmethodik gemäß einem Modelltyp und Modelleigenschaften abgeglichen wird, um die empfohlenen Angriffe/Tests für jede der prüfbaren Robustheitskategorien zu erstellen,
wobei das Projekt-/Test-Analysemodul (208) dazu betreibbar ist, Leistungsveränderungen der Testergebnisse über die Zeit im Hinblick auf die Robustheitszertifizierung zu überwachen, um eine Schwachstelle in dem zu testenden Modell im Falle eines fehlgeschlagenen Tests zu lokalisieren und den Test, bei welchem das Modell fehlgeschlagen ist, erneut auszuführen, nachdem der vorgeschlagene Abwehrmechanismus angewendet wurde, um eine Steigerung der Resilienz des Modells in Bezug auf eine der getesteten Robustheitskategorien und die Zertifizierung des Modells zu ermöglichen.

2. System nach Anspruch 1, welches ferner eine Test-Ausführungsumgebung (207) zum Ausführen mehrerer Tests umfasst.

3. System nach Anspruch 1, welches ferner einen Daten-/Modell-Profiler (203) zum Erstellen eines Profils auf Grundlage von Einstellungen und Konfigurationen der Datensätze und der ML-Modelle umfasst.

4. System nach Anspruch 1, welches ferner ein Test-/Angriffs-Ontologie-Modul (205) zum Speichern der empfohlenen Angriffe/Tests mit Metadaten und zum Zuordnen der empfohlenen Angriffe/Tests zu entsprechenden Einstellungen und Konfigurationen umfasst.

5. System nach Anspruch 1, wobei die definierte Projektrichtlinie einen Mindest-Robustheitswert definiert, welcher erforderlich ist, damit ein ML-Modell akzeptiert und zertifiziert wird.

6. System nach Anspruch 1, wobei Zustände eines Projekts aus der Gruppe ausgewählt werden, welche besteht aus:
- einem Entwicklungszustand;
- einem Produktionszustand;
- einem Rollback-Zustand.

7. System nach Anspruch 1, wobei das Daten-Repository (202) ferner ein Modell-Repository zum Speichern von Modellversionen umfasst, welche Änderungen in einem ML-Modell widerspiegeln.

8. System nach Anspruch 1, wobei jeder relevante Test, welcher an einem zu untersuchenden Modell auszuführen ist, ein/eine:
- Modell-Algorithmustyp; oder
- Trainingsdatentyp; oder
- Trainingsdatengröße; oder
- Modell-Implementierungsformat/-typ
ist.

9. System nach Anspruch 1, welches über einen Frontend-Verwaltungsserver implementiert ist, welcher dazu eingerichtet ist, die Systemmodule auszuführen und einen API-Zugang für eine externe Befehlszeilenschnittstelle (CLI) sowie einen Frontend-Benutzeroberflächendienst (UI) bereitzustellen, welcher die Durchführung einer oder mehrerer Systemoperationen ermöglicht.

10. System nach Anspruch 1, wobei die Systemoperationen eines oder mehrere der folgenden umfassen:
- Erstellen neuer Projekte;
- Erstellen neuer Benutzer;
- Zuweisen neuer Benutzer zu bestehenden Projekten;
- Zuweisen einer Richtlinie zu bestehenden Projekten;
- Erstellen neuer Test-Suites;
- Ausführen von Test-Suites;
- Zugriff auf Analysen von Projekten oder deren Test-Suites.

## Revendications

1. Un système (200) pour tester des modèles d'apprentissage automatique, ML, et d'apprentissage profond pour leur robustesse, et leur durabilité contre le biais contradictoire et les attaques contre la vie privée, comprenant :
• a) un Référentiel de défense (209) dans lequel sont stockés des mécanismes de défense ;
• b) un Moteur de recommandation de tests (204) pour recommander des attaques/tests pertinents pour chaque modèle ML évalué en faisant correspondre une méthodologie de test selon le type de modèle et les propriétés du modèle et pour créer une attaque/un test recommandé, dans lequel des ensembles de données d'apprentissage et de test stockés sont utilisés pour évaluer la robustesse de chacun des modèles ML, et chacune des attaques/chacun des tests recommandés est évalué par rapport à une source de données qui est l'ensemble de données d'apprentissage ou de test et un résultat d'évaluation correspond à la robustesse du modèle ML sur ladite source de données ; et
• c) un module d'Analyse de projet/test (208) pour analyser les résultats de test et apte à suggérer l'un des mécanismes de défense stockés dans le Référentiel de défense pour atténuer une vulnérabilité située dans le modèle en cours de test,
**caractérisé en ce que** le système comprend en outre :
• d) un Référentiel de projets (201) au sein duquel des métadonnées de projets en cours ayant chacun une politique de projet définie et de modèles ML créés et de sources de données étant associées auxdits projets en cours peuvent être stockées, dans lequel la politique de projet définie définit des critères pour un niveau de robustesse souhaité dans chaque catégorie de robustesse testable parmi le biais, la vie privée et l'apprentissage contradictoire, un projet n'étant achevé que lorsqu'un modèle ML est certifié conforme à toutes les contraintes de sa politique de projet définie correspondante ;
• e) un Référentiel de données (202) au sein duquel les ensembles de données d'apprentissage et de test et les modèles ML utilisés dans chacun desdits projets peuvent être stockés ; et,
• f) un Référentiel d'attaques (206) pour stocker les tests/attaques recommandés par lesquels un modèle ML est testé par rapport à chacune des catégories de robustesse testables,
dans lequel le Moteur de recommandation de tests (204) est apte à recommander des attaques/tests pertinents pour chaque modèle ML évalué en faisant correspondre une méthodologie de test selon le type de modèle et les propriétés du modèle et à créer les attaques/tests recommandés pour chacune des catégories de robustesse testables,
dans lequel le module d'Analyse de projet/test (208) est apte à surveiller les changements de performance au cours du temps des résultats de test en termes de certification de robustesse de manière à localiser une vulnérabilité dans le modèle en cours de test dans le cas d'un test échoué et à réexécuter le test pour lequel le modèle a échoué après lui avoir appliqué le mécanisme de défense suggéré pour faciliter une augmentation de la résilience du modèle par rapport à l'une des catégories de robustesse testées et la certification du modèle.

2. Système selon la revendication 1, comprenant en outre un Environnement d'exécution de tests (207) pour exécuter de multiples tests.

3. Système selon la revendication 1, comprenant en outre un Profileur de données/modèles (203) pour créer un profil, sur la base de réglages et de configurations des ensembles de données et des modèles ML.

4. Système selon la revendication 1, comprenant en outre un module d'Ontologie de tests/attaques (205) pour stocker les attaques/tests recommandés avec des métadonnées et associer les attaques/tests recommandés à des réglages et configurations correspondants.

5. Système selon la revendication 1, dans lequel la politique de projet définie définit un score de robustesse minimal qui est requis pour qu'un modèle ML soit accepté et certifié.

6. Système selon la revendication 1, dans lequel les états d'un projet sont choisis dans le groupe constitué par :
• un état de Développement ;
• un état de Production ;
• un état de retour arrière.

7. Système selon la revendication 1, dans lequel le Référentiel de données (202) comprend en outre un Référentiel de modèles pour stocker des versions de modèle qui reflètent des changements dans un modèle ML ;

8. Système selon la revendication 1, dans lequel chaque test pertinent à exécuter sur un modèle examiné est :
• un type d'algorithme de modèle ; ou
• un type de données d'apprentissage ; ou
• une taille de données d'apprentissage ; ou
• un format/type d'implémentation de modèle.

9. Système selon la revendication 1, implémenté sur un Serveur de gestion frontal adapté pour exécuter les modules du système et fournir un accès API pour une interface en ligne de commande (CLI) externe et un service d'Interface Utilisateur (UI) frontale qui permet d'effectuer une ou plusieurs opérations du système.

10. Système selon la revendication 1, dans lequel les opérations du système comprennent une ou plusieurs des opérations suivantes :
• la création de nouveaux projets ;
• la création de nouveaux utilisateurs ;
• l'attribution de nouveaux utilisateurs à des projets existants ;
• l'attribution d'une politique à des projets existants ;
• la création de nouvelles suites de tests ;
• l'exécution de suites de tests ;
• l'accès à des analyses de projets ou de leurs suites de tests.
